# EUROPEAN PATENT SPECIFICATION

(11) **EP 4 363 264 B1**
(45) Date of publication and mention of the grant of the patent: **11.03.2026**
(21) Application number: 21770029.3
(22) Date of filing: 06.09.2021
(51) Int. Cl.: B60L 53/35

(54) **CHARGING SYSTEM FOR AN INDUSTRIAL ELECTRIC VEHICLE, METHOD OF CHARGING AN INDUSTRIAL ELECTRIC VEHICLE AND USE OF A CHARGING SYSTEM**
LADESYSTEM FÜR EIN INDUSTRIELLES ELEKTROFAHRZEUG, VERFAHREN ZUM LADEN EINES INDUSTRIELLEN ELEKTROFAHRZEUGS UND VERWENDUNG EINES LADESYSTEMS
SYSTÈME DE CHARGE POUR UN VÉHICULE ÉLECTRIQUE INDUSTRIEL, PROCÉDÉ DE CHARGE D'UN VÉHICULE ÉLECTRIQUE INDUSTRIEL ET UTILISATION D'UN SYSTÈME DE CHARGE

(43) Date of publication of application: 08.05.2024
(73) Proprietor: ABB SCHWEIZ AG, 5400 Baden (CH)
(72) Inventor: BEUTLER, Nic, 8048 Zürich (CH); ASHNAGARAN, Mehrzad, 5502 Hunzenschwil (CH)
(74) Representative: Zimmermann & Partner Patentanwälte mbB
(86) International application number: PCT/EP2021/074527
(87) International publication number: WO 2023/030665

(56) References cited:
- EP-A1- 3 838 654
- WO-A1-2019/112586
- US-A1- 2017 050 526
- US-A1- 2017 163 073
- US-A1- 2021 218 212

## Description

Aspects of the invention relate to a charging system for industrial electric vehicles, in particular a transportable and/or modular charging system suitable for use in industrial environments. Further aspects relate to modules of the charging system being coupled to a moveable frame. Further aspects relate to a method of charging an industrial electric vehicle. The invention is set out in the appended set of claims.

### Technical background:

Within industrial operations, reliability, safety and productivity are the essential ingredients for a successful operation. With the shift from fossil fuel to electrically operated vehicles, new constraints are imposed through this new technology. In the context of industrial operations, such as mining, agriculture, construction, aviation or related fields, productivity targets should be kept or even be improved with the adoption of new technologies.

Today's industrial electric vehicles (IEVs) have a limited operational range, long downtime for recharging and high initial cost attributed at least in some part to the battery. Many of the current problems in industrial settings result from an inefficient charging of the IEVs. Large, expensive batteries are required if efficient charging is unavailable, e.g. if the intervals between charging the IEV are designed to correspond to full shifts.

Charging infrastructure at industrial sites is often inadequate and may create a bottleneck that results in undesirable downtime during high charging demand. Providing fixed charging stations may not always be possible or feasible on-site, and installing additional charging capacity or charging stations may result in oversizing and unnecessary costs. Thus, many IEVs may be operated with oversized batteries, charged for extended durations at remote locations, and/or not operated at their potential efficiency.

Furthermore, for many industrial operations, vehicle fleets may be diverse and comprise different types of vehicles for performing specialized operations. Consequently, charging stations may be vendor- or even vehicle-specific, which may require a higher than necessary number of charging stations.

Document US 2017/050526 A1 describes a method for providing a temporary connection between two objects. A robot is mounted on height adjustment means, including a platform supported by an electrically driven hoist means, which is supported by a carriage of a coarse adjustment device.

Document EP 3 838 654 A1 describes a distributed charging system for a plurality of charging stations. The system may comprise a plurality of charging stations transportable by charging station trucks. A lifting mechanism of the charging station transport truck is used for unloading charging stations from the transport platform of the truck to the ground floor.

Document WO 2019/112586 A1 describes a charging delivery system for a vehicle. A system includes a robotic arm extending from a charge-providing vehicle, having a plurality of segments, wherein each of at least two pairs of adj acent segments of the plurality move, relative to one other, in at least two degrees-of-freedom, a charge circuit delivering power to a charge port of the arm; and a computer programmed to control the arm.

Document US 2017/163073 A1 describes an energy storage robot to power electric underground equipment. The energy storage robot may comprise an attachment mechanism, which is arranged to mechanically connect the energy storage robot to the electric underground equipment.

Document US 2021/218212 A1 describes an automated system for connecting and/or disconnecting the power supply and/or data connection for refrigerated containers, or reefers, in the port, storage and interchange field and/or on board ship. The automated system includes a mechanical arm.

Thus, there is a need for a solution that provides 24/7 operational availability, long expected lifetime, is suitable for a relocation of the production area, provides flexibility in case of increase or decrease of production targets, and is OEM and vehicle type agnostic. The invention described herein may satisfy such needs at least partially.

### Summary of the invention:

The invention is set out in the appended set of claims.

In view of the above, a charging system for an industrial electric vehicle, a method of charging an industrial electric vehicle and a use of a charging system according to the independent claims are provided.

According to an aspect, an industrial electric vehicle (IEV) is described. An IEV is a vehicle suitable for industrial operations, and may be specialized for industrial operations. An IEV may be an off-highway vehicle. An IEV may be heavy machinery. IEVs may be heavy-duty vehicles. A personal electric vehicle, such as vehicles intended for personal transport, e.g. electric cars, electric motorcycles, recreational vehicles, golf carts, etc. are not considered IEVs. The IEV may be a battery electric vehicle (BEV) or even a hybrid vehicle having (plug-in) charging capabilities. While not limited to any specific example, IEVs may include diggers, haulers, drillers, bulldozers, earthmovers, trucks, forklifts, agricultural vehicles such as harvesters or tractors, mining vehicles, construction site vehicles, rail-based vehicles such as locomotives, aircraft such as passenger aircraft, boats, mobile robots or drones. While not limited to any specific example, industrial operations may include operations associated with mining, agriculture, construction, stockyard logistics, or similar industries or industry-related operation.

According to an aspect, the charging system includes a charger module. The charger module is configured for receiving an input power from a primary power source. The primary power source may be an electrical grid, a high, medium or low voltage substation, a generator, such as a diesel electric generator or a fuel cell, a photovoltaic installation, a windfarm, an intermediate energy store such as a battery installation, fly wheels, supercapacitors, or any other source of electrical power. The input power may be provided as a low or medium voltage. The input power may be a direct current (DC) or an alternating current (AC). The input power may have a power of approximately at least 300 kW, at least 500 kW, or at least 600 kW. For example, the input power may be a 3-phase 600 V AC input. Further input power examples include AC inputs having 0.38 kV, 0.4 kV, 0.48 kV, 0.6 kV, 1 kV, 3.3 kV, 4.16 kV, 6.6 kV, 11 kV, 12.47 kV, 15 kV, 22 kV, 33 kV, or 35 kV. Further input power examples include a DC input of up to 3 kV, such as between 100 V and 3000V, or between 600 V and 3000 V.

According to an aspect, the charger module is configured for converting the input power into an output power. The output power may be a DC output power and/or a DC electrical power. The output power may be an AC output power and/or an AC electrical power. In a configuration having one charger module and one connector module, the output power may be an electrical power of approximately at least 300 kW, at least 500 kW, or at least 600 kW. The output power may have a voltage of approximately at least 300 V, at least 500 V, or at least 600 V. The output power may have a current of approximately at least 500 A, at least 800 A, or at least 1000 A. For example, the charger module may provide an output power of approximately 600 kW at approximately 600 V and approximately 1000 A. The charger module may include at least one transformer for converting the input power. The charger module may include at least one rectifier for rectifying the input power, particularly if the input power is an AC input power. The charger module may include at least one inverter, particularly if the output power is an AC output power. The transformer, rectifier and/or the inverter may include solid-state devices, and/or be implemented as a converter, such as a solid-state converter. The charger module may include switchgear, such as low voltage or medium voltage switchgear. The charger module may comprise several sub-modules, e.g. a 600 kW charger module may include four 150 kW converters. The charging system may include a controller for controlling the charger module to charge an IEV electrically and/or communicatively connected to the charger module. The charger module may be configured for, e.g. by the controller, regulating the output power according to charging requirements of the IEV.

According to an aspect, an electrical connection is described. The charger module is configured for providing the output power to a connector module, and the connector module is electrically connected, by the electrical connection, to the charger module for providing the output power to the connector module. The electrical connection may be an electrical connection rated for conducting the output power as described herein, particularly a DC electrical connection. The electrical connection may include an electrical cable between the charger module and the connector module. The electrical connection may be pluggable, i.e. comprise electrical connectors and/or plugs (e.g. on the cable, within the charger module and/or the connector module) configured for reversibly connecting and/or disconnecting the electrical connection. The electrical connection may have a length, e.g. a cable length, of up to 50 meters, up to 75 meters, up to 100 meters or even up to 130 meters. The electrical connection may have a length, e.g. a cable length, of at least 30 meters, at least 50 meters, at least 75 meters or at least 100 meters. Thus, beneficially, in some implementations, the charger module may be located at a distance from the connector module, the distance typically being limited by the length of the electrical connection. In configurations where the charger module and the connector module are provided on a single moveable frame, the electrical connection may also be a fixed electrical connection, such as a busbar. In configurations where the charger module and the connector module are provided on separate moveable frames, particularly in configuration where more than one charger module and/or more than one connector module is provided, the electrical connection may include a bus connecting the more than one charger module and/or the more than one connector module.

According to an aspect, the charging system includes a connector module with a charging connector. The connector module is electrically connected to the charger module and configured for receiving the output power from the charger module, particularly via the electrical connection. The connector module is configured for charging the IEV with the output power. Charging the IEV may include providing the output power to the IEV, and storing at least a part of the output power in an internal energy storage of the IEV. Charging the IEV may particularly include charging a battery of the IEV. The charging connector is electrically connected to the charger module for receiving the output power from the charger module. The charging connector may be electrically connected with the electrical connection by electrically connecting the charging connector to a plug or socket within the connector module connected to the electrical connection.

According to an aspect, the connector module is configured for transiently connecting the charging connector to a receiving connector of the IEV, particularly for charging the IEV. Transiently connecting may include connecting an IEV for a charging operation for a limited duration, and disconnecting, e.g. when the IEV is fully charged or demanded elsewhere, the charging connector. The charging connector may be configured for interacting with the receiving connector of the IEV.

According to an aspect, the charging connector may be form-fit to a vehicle connector of the IEV, i.e. be configured for forming an electrical connection, particularly a conductive electrical connection, with the receiving connector, e.g. by plugging into the receiving connector. The charging connector may be configured for providing a long-term current of approximately at least 400 A, at least 600 A, or even at least 800 A. The charging connector may be configured for providing a short-term and/or maximum current of approximately at least 1000 A, at least 1200 A, at least 1400 A, or even at least 1500 A. The charging connector may be configured for providing voltages of approximately at least 1000 V, at least 1200 V, or even at least 1500 V. For example, the charging connector may be configured for providing an 800 A longtime current at 1500 V. The charging connector may be configured for repeatedly contacting, i.e. connecting and disconnecting, an IEV receiving connector. The charging connector may be configured for at least 20,000 contacts, at least 40,000 contacts or at least 50,000 contacts. The charging connector may be a charging connector such as described in document EP3280608A1, however, the present invention is not limited to any specific type of charging connector. The charging connector may be particularly suitable for being operated in harsh environments, e.g. by being configured to withstand the ingress of dust, sand, water. The charging connector may be rated IP55 or better, e.g. IP65 or even IP66. The charging connector may be a charging connector according to SAE J3105, such as a pin and socket connector according to SAE J3105-3.

According to an aspect, the charging system, particularly the charger module, the connector module, the charging connector and/or the electrical connection, may comprise an electric vehicle conductive charging system and/or be configured as components of an electric vehicle conductive charging system according to standard IEC 61851.

According to an aspect, the charging connector may be galvanically isolated from the receiving connector even during a charging operation. The charging connector and the receiving connector may be electrically connected by electromagnetic induction and/or magnetic flux, i.e. be inductively coupled, particularly employing resonant inductive coupling. For example, the charging connector and the receiving connector may form, when coupled, a transformer and/or a wireless charging pair. In embodiments having galvanically isolated charging and receiving connectors, the output power may be provided as an AC power, and/or converted into an AC power, e.g. by the connector station. The charging connector and/or the receiving connector may, for example, include coils, such as plate-shaped coils and/or coil pads. Charging the IEV, particularly connecting the charging connector to the receiving connector, may include positioning the charging connector adjacent to or in the vicinity of the receiving connector, and/or aligning the charging connector and the receiving connector. The charging connector and/or the receiving connector may be configured according to wireless power transfer standards, such as SAE J2954, particularly SAE J2954/2.

According to an aspect, the connector module is configured for charging the industrial electric vehicle with the output power. The output power may be a portion of the output power provided by the charger module, or be the full power provided by the charger module. Particularly in embodiments having more than one connector module, the output power may be split between the more than one connector modules. Particularly in embodiments having more than one charger module, the output power of the more than one charger module may be combined. The output power may be adjusted, e.g. reduced, according to the specifications of the IEV, e.g. the IEV may communicate a power rating, and the output power may be adjusted according to the power rating. Thus, the invention is not limited to only providing and/or utilizing one specific output power, and is not limited to being operated at only one specific output power.

According to an aspect, the connector module includes a first actuator and a second actuator. The first actuator is configured for adjusting a vertical position of the charging connector, and the second actuator is configured for adjusting a horizontal position of the charging connector. The controller is configured for detecting a position of the receiving connector, and for controlling the first actuator to adjust the position of the charging connector according to the position of the receiving connector. The receiving connector may be, for example, provided on a side of the IEV, such as a side-facing surface. The receiving connector may also be provided at a front-facing surface of the IEV, or at a back-facing surface of the IEV, or even the top or bottom of the IEV. The controller may detect the position of the receiving connector by analyzing information provided by an optical sensor module, such as an image or a video signal provided by a camera, e.g. by identifying optical markers provided at the receiving connector, and/or by utilizing pattern recognition software for identifying the receiving connector in the image, such as neural networks. The optical markers may, for example, be an ArUco marker positioned at a standardized position on the IEV relative to the receiving connector, and the position of the receiving connector may be derived from the position of the ArUco marker(s). Additionally or alternatively, the charging system may include one or more RFID readers for reading RFID tags provided on the IEV, for example in standardized positions on the IEV relative to the receiving connector, and the position of the receiving connector may be derived from the position of the RFID tag. The charging system may include sensors, such as photoelectric sensors, such as one or more photoelectric guards, for determining, based on the sensor signal, the position of the IEV and/or the receiving connector of the IEV. The controller may identify the IEV by communicating with the IEV, e.g. via a wireless network, or by reading the RFID tag, and determine the receiving connector position, or data indicative of the receiving connector position, such as the relative height of the receiving connector for each IEV or IEV class, by looking up the data in a database. Further methods for detecting a position of the receiving connector may be employed.

According to an aspect, the position of the receiving connector may include a height, relative to the charger module and/or the charging connector, and the controller may be configured to determine a target height of the charging connector based on the position of the receiving connector. The target height may be the same height as the height of the receiving connector, particularly relative to ground, i.e. if height of the charging connector is adjusted to the target height, the height of the charging connector may be identical to the height of the receiving connector. The first actuator may be configured for vertically moving the charging connector according to a target height, to position the charging connector at the target height. According to beneficial embodiments, the first actuator may be configured for an essentially vertical movement, i.e. for adjusting the charging connector height along a vertical axis. Alternatively, the first actuator may be configured for a movement having a vertical component, such as a movement along a curve, e.g. a bow-like curve, a linear diagonal movement having both a vertical and a horizontal component, or the like.

According to an aspect, the second actuator is configured for adjusting a horizontal position of the charging connector to connect the charging connector to the receiving connector. Particularly, the actuator may be configured for extending at least a portion of the charging connector towards the receiving connector, particularly for forming an electrical contact between the charging connector and the receiving connector. According to embodiments, the receiving connector may be a socket and the charging connector may be a plug, and horizontally moving and/or extending the charging connector may insert the plug into the socket. Further types of charging connector and receiving connector types may be suitable, e.g. extending at least a portion of the charging connector may include extending a pantograph-type connector to a receiving connector, such as a receiving rail, configured for receiving the pantograph-type connector. Extending at least a portion of the charging connector may bring a transmission coil of the charging connector into a position suitable for a wireless power transfer to a receiving coil of the receiving connector.

According to an aspect, the controller of the charging system may be configured for detecting the industrial electric vehicle inside a charging area. A charging area may be an area close or adjacent to the charging system, particularly the connector module. For example, the charging area may be a portion of a charging lane to be entered by the IEV to be charged. The connector module may be positioned next or adjacent to the charging lane, and an area of the charging lane adjacent to the connector module may be the charging area. A charging system including more than one connector module may include a separate charging area for each connector module. The charging area may be an area that is monitored by the charging system, e.g. the area captured by a visual capture device such as a camera. The charging area may be an area in which the IEV can be charged by the charging system, i.e. the charging area may define a position for the IEV to enter for charging. Detecting the IEV inside the charging area may include communicatively connecting the controller to the IEV, e.g. via a wireless connection, such as a wireless network connection, and exchanging information related to the charging of the IEV. Detecting the IEV inside the charging area may include detecting a position of a receiving connector of the IEV, according to aspects and/or embodiments described herein.

According to an aspect, the controller may be configured for communicating with the IEV. The communication may include sending, by the controller, a charging system ID and/or a charging system power rating, such as available charging voltages and currents. The communication may include receiving, by the controller, information sent by the IEV such as a vehicle ID**,** a vehicle power state, particularly a battery state of charge (i.e. a battery level). The communication may be a communication according to a Plug & Charge convention, such as ISO 15118. The communication may be wire-based, i.e. include sending and receiving the information via the charging connector. The communication may further include utilizing additional communication means, such as a wireless connection, between the controller and the IEV. The wireless communication may include communicating according to, e.g., OPPCharge standards. Beneficially, a wireless connection may allow communication with the IEV without connecting the charging connector and the receiving connector, i.e. before or after the charging connection has been formed.

According to an aspect, the controller may be configured for determining a horizontal offset between the position of the receiving connector and the charging connector. The horizontal offset may be determined from the position of the receiving connector, e.g. as described for the target height. The horizontal offset may be an offset in a driving direction of the vehicle. The horizontal offset may be an offset orthogonal to the vertical offset, i.e. the difference between the height of the charging connector and the target height, of the charging connector, and/or orthogonal to the direction of movement effected by the second actuator. The horizontal offset may be an offset along an axis that is not an axis adjustable by either the first and the second actuator. For example, a horizontal offset may be present when the IEV is, relative to the connector module, positioned too far forward or backwards for the charging connector to be connected to the receiving connector, even though the charging connector is positioned at the same height as the receiving connector, i.e. the target height.

According to an aspect, the charging station may be configured for sending a movement instruction signal to the IEV for moving the IEV according to the horizontal offset. The controller may be configured for controlling a communication device, such as a wireless communication device, to transfer the movement instruction to the IEV. For example, the controller may be configured to be communicatively connected to the IEV positioned in the charging area, and communicate the horizontal offset to the IEV. The IEV may be configured for e.g. displaying the horizontal offset to a driver. Alternatively, or additionally, the charging system may comprise signaling devices, such as displays, indicators, lights, lanterns, audio signaling devices such as loudspeakers, sirens, beepers, etc., which may signal a driver of the vehicle to adjust the horizontal position of the IEV according to the offset, e.g. by displaying or audibly indicating to the driver to move the IEV forward, backward, or to stop if a horizontal target position has been reached. Preferably, the signaling devices may be positioned close to the connector station, connected to the connector station, and/or placed in the vicinity of the connector station.

According to an aspect, the connector module, and optionally the charger module, is/are arranged on a movable frame. The movable frame may include structures for supporting the charger module and/or the connector module, e.g. by mounting the modules to the frame. The frame may include structures for facilitating movement of the frame, particularly including the connector module and/or the charger module arranged thereon. For example, the movable frame may include a skid, such as an industrial skid. The movable frame may include one or more axes having wheels attached thereto. The moveable frame may include mounts and/or holders for permanently or removably attaching wheels to the moveable frame. The moveable frame may include a trailer, such as a flatbed industrial trailer.

According to an aspect, the movable frame includes a coupling device. The coupling device is configured for coupling the movable frame to a transport device for transporting the movable frame. The coupling device may be a trailer coupling. The coupling device may include structures within the moveable frame, such as holes for attaching hooks, such as crane hooks, for lifting the moveable frame. The coupling devices may include pulling bars, such as removable pulling bars attached or attachable to the skid, lifting eyebolts, particularly lifting eyebolts attached to a topside portion of the moveable frame, and/or tiedown points. The coupling device may include forklift pockets for lifting the moveable frame with a forklift. The coupling device may include catches, latches and/or locking devices for fixing the moveable frame to a truck while transporting the moveable frame with the truck. The moveable frame may include more than one coupling device, and any combination of coupling devices described herein. Further coupling devices may be utilized. The coupling device may allow a reversible coupling of the moveable frame and the transport device. Furthermore, the coupling device may be coupled for long durations or even be permanently coupled to the transport device. The charging system may be configured to be operable while a moveable frame is coupled to the transport device, e.g. while being coupled to a hauling vehicle.

According to an aspect, a transport device may be a vehicle, such as an industrial vehicle or a transport vehicle, or even a stationary device, such as a crane. Examples for transport devices include, but are not limited to, forklifts, cranes, trucks, low- and high-loaders, helicopters or further aircraft, ships, tractors, trains or the like. A transport device may be chosen according to the industrial setting, e.g. for farming applications, a tractor may be a suitable transport device, while for mining applications, an earthmover may be chosen. Likewise, the moveable frame may be adapted for the respective application, i.e. in a rail-based industrial setting, the moveable frame may include train wheels allowing the moveable frame to be pulled on the rail, while in a mine, the moveable frame may include skids that can be lifted or pulled by e.g. a loader, a lifter or a mover.

According to an aspect, the charging system may include one charger module and one connector module. According to an aspect, the charging system may include one charger module and a plurality of connector modules, such as two, three, four, five or even more connector modules. Accordingly, the output power provided by the charger module may be split between the connector modules, e.g. by separately connecting the connector modules with separate electrical connections. The power rating of the charger module may be adjusted accordingly, i.e. the power ratings discussed herein for a configuration having one charger module and one connector module may be increased, e.g. multiplied, according to the number of connector modules relative to the number of charger modules. According to an aspect, the charging system may include a plurality of charger modules and a plurality of connector modules, i.e. any configuration of n charger modules and m connector modules may be employed, such as one, two, three, four, five or even more charger modules in combination with one, two, three, four, five or even more connector modules. For example, two separate input powers rated at 300 kW may be received by two charger modules, thus resulting in a combined output power of approximately 600 kW. The combined output power may be provided to one connector module for charging an IEV with approximately 600 kW. Likewise, the available output power may be split between any number of connector modules.

According to an aspect, particularly in embodiments having more than one charger module and/or more than one connector module, the output power may be fed, by the charger module(s), into a bus system, and received, by the connector module(s), from the bus system. The bus system may include, at least in part, the electrical connection. The electrical connection or a plurality of electrical connections may be formed between the bus system and the charger station and/or the bus system and the connector modules.

According to an aspect, only the connector module may be provided on a moveable frame. The charger module may be fixedly installed, e.g. in the vicinity of a power substation, and the connector module may be freely placed at a suitable position within the obtainable range as defined by the length of the electrical connection. According to an aspect, both the connector module and the charger module may be provided on separate moveable frames. Accordingly, the charger module may be freely placed at a suitable position.

According to an aspect, the charger module and the connector module may be arranged on the same moveable frame, i.e. be transportable together. Beneficially, this may allow a faster setup of the charging system in locations where space is not limited.

According to an aspect, particularly for charging systems having both the charger module and the connector module provided on a single frame, or particularly for the connector module, a staffroom for personnel, such as the drivers of the IEVs, may be provided. The staffroom may allow the personnel to leave harsh environments during the charging of the IEV.

According to an aspect, either or both of the charger module and the connector module may comprise an HVAC system configured for heating, cooling and/or air-conditioning, i.e. for providing suitable environmental conditions within the housing of the module to maintain operating conditions, even in harsh environments, such as hot or cold environments.

According to an aspect, the charging system or a device of the charging system, particularly a controller of the charging system, may further comprise a network interface for connecting the device to a data network, in particular a global data network. The data network may be a TCP/IP network such as Internet. The controller may be operatively connected to the network interface for carrying out commands received from the data network. The commands may include a control command for controlling the device to carry out a task such as identifying a vehicle, fleet management, route planning, scheduling or the like. In this case, the device/controller is adapted for carrying out the task in response to the control command. The commands may include a status request. In response to the status request, or without prior status request, the device/controller may be adapted for sending a status information to the network interface, and the network interface is then adapted for sending the status information over the network. The commands may include an update command including update data. In this case, the device/controller is adapted for initiating an update in response to the update command and using the update data.

The data network may be an Ethernet network using TCP/IP such as LAN, WAN or Internet. The data network may comprise distributed storage units such as Cloud. Depending on the application, the Cloud can be in form of public, private, hybrid or community Cloud.

An advantage of the charging system described herein is the modularity of the system. A number of charger modules and connector modules may be provided according to the needs of the industrial operation. The modules may be easily transported to the industrial site and quickly set up. If the industrial operation is relocated, e.g. when a mining operation shifts to another dig site or when a harvesting operation proceeds to another set of fields, the modules may be moved accordingly with low effort. This may allow the IEVs to be charged close to where they are needed, thus reducing travel time. The IEVs may be charged in short time, thus allowing mid-shift charging and therefore a reduction in required battery capacity, thus reducing the overall fleet cost. A further advantage includes that the charging system may be particularly suitable for a wide range of IEV types, particularly IEVs having differently positioned receiving connectors, thus eliminating the need for IEV-specific charging systems. Should the charging demand increase or decrease, modules may be added or removed according to the demand. This may reduce vehicle downtime while simultaneously preventing oversizing of the charging infrastructure.

Further advantages, features, aspects and details that can be combined with embodiments described herein are evident from the dependent claims, the description and the drawings.

### Brief description of the Figures:

The details will be described in the following with reference to the figures, wherein
- Fig. 1: is a schematic side view of a charging system according to an embodiment;
- Fig. 2: is a schematic side view of a connector module according to an embodiment; and
- Fig. 3: is a method according to an embodiment.

### Detailed description of the Figures and of embodiments:

Reference will now be made in detail to the various embodiments, one or more examples of which are illustrated in each figure. Each example is provided by way of explanation and is not meant as a limitation.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

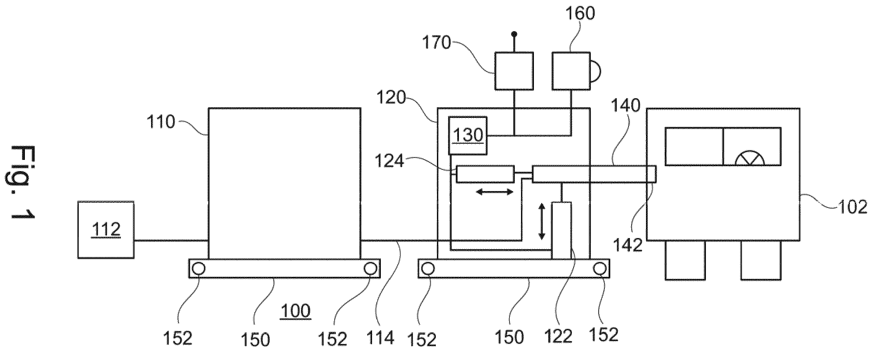

Referring now to Fig. 1, a charging system 100 according to an embodiment is shown. An industrial electric vehicle (IEV) 102 is positioned adjacent to a connector module 120, a receiving connector 142 being provided in a sidewall of the IEV. In the figure, the IEV 102 is drawn as front-facing, however, according to embodiments, the IEV 102 may also be back-facing, i.e. the receiving connector 142 may be installed on either side of the vehicle.

The charging system 100 has a charger module 110 electrically connected to a power source 112 for receiving an input power. The charger module 110 converts the input power into an output power, and provides the output power to the connector module 120 via the electrical connection 114.

The charging system 100 has a connector module 120 including a first actuator 122 and a second actuator 124, the actuators 122, 124 being mechanically connected to a charging connector 140. In Fig. 1, the actuators 122, 124 are not drawn
to scale, and according to embodiments, the actuators may allow more freedom of movement than shown in the figure.

The first actuator 122 can move the charging connector 140 in a vertical direction, as symbolized by the vertical arrow, i.e. up or down. By allowing such vertical movement, the position of the charging connector may be adjusted according to the position of the receiving connector 142 of the IEV 102, particularly multiple different positions of different types of IEV.

The second actuator 124 can move the charging connector 140 in a horizontal direction. The horizontal direction may be a direction projecting horizontally away from the connector module 120. In the embodiment shown in Fig. 1, the second actuator 124 can adjust the horizontal position of the charging connector 140, as symbolized by the horizontal arrow, to extend the charging connector 140 from the connector module 120. Extending the charging connector 140 from the connector module 120 brings the charging connector 140 in contact with the receiving connector 142 and forms an electrical connection between the charging connector 140 and the receiving connector 142 for charging the IEV 102. After finishing a charging operation, the second actuator 124 may retract the charging connector 140, e.g. into a housing of the connector module 120, and the first actuator 122 may bring the charging connector 140 into a default position.

According to embodiments, the charging connector 140 may allow some movement when being connected to the receiving connector. For example, the charging connector may be pivotable, e.g. for up to 5°, along one axis, such as a horizontal axis or vertical axis, or even both the horizontal and vertical axes. The charging connector may be guided, by a guide structure provided around the receiving connector 142, to the receiving connector 142 when the charging connector 140 is extended. Beneficially, small positional offsets between the horizontal and/or vertical position, e.g. positional offsets of up to 5 cm, up to 10 cm, up to 15 cm, up to 20 cm, up to 25 cm or even up to 30 cm, of the charging connector 140 and the receiving connector 142 may be mitigated.

As shown in Fig. 1, the charging system includes a controller 130. The controller 130 may be provided in the connector module 120. Additionally, as described with respect to aspects of the invention, a controller may be provided for and/or in the charger module 110, e.g. to control converting the input power into the output power. A separate controller (not shown) may be provided, e.g. inside the charger module 110. The controller 130 may control the charger module 110. The controller 130 may be
provided inside the charger module 110. An external controller (not shown) may be provided in addition or alternatively to the controller 130.

The controller 130 is communicatively connected to the first actuator 122 and the second actuator 124 for controlling the actuators 122, 124. Furthermore, the controller 130 is connected to an optical sensor module 160. The optical sensor module 160 may provide information to the controller 130 to allow the controller 130 to detect an IEV 102 inside the charging area, which is the area adjacent the connector module 120. The controller 130 is further configured for detecting a position of the receiving connector 142, and for controlling the actuators 122, 124 according to aspects and/or embodiments described herein, to adjust the position of the charging connector 140 according to the position of the receiving connector 142.

As shown in Fig. 1, the charging system 100 may further include a communication module 170 communicatively coupled to the controller 130. The communication module 170 may be a wireless network adapter such as a WiFi module, configured for connecting the controller 130 to a wireless network. The communication module 170 may be configured for wireless communication between the charging system 100 and the IEV 102. The wireless communication may include a communication according to OPPCharge protocols, i.e. be utilized for communicating charging-relevant information between the charging system 100 and the IEV 102, e.g. according to aspects and/or embodiments described herein.

As shown in Fig. 1, both the charger module 110 and the connector module 120 are each arranged on a moveable frame 150. According to embodiments, the moveable frame is a skid that fully supports the weight of the modules 110, 120, beneficially allowing the modules to be safely positioned even on difficult terrain without requiring specialized foundations or the like. Additionally, e.g. if required by the terrain, the moveable frame 150 may include adjustable supports (not shown) for levelling the moveable frame 150. The moveable frames 150 include coupling devices 152, which, in the embodiment shown in Fig. 1, are openings for providing a pulling bar therein (not shown).

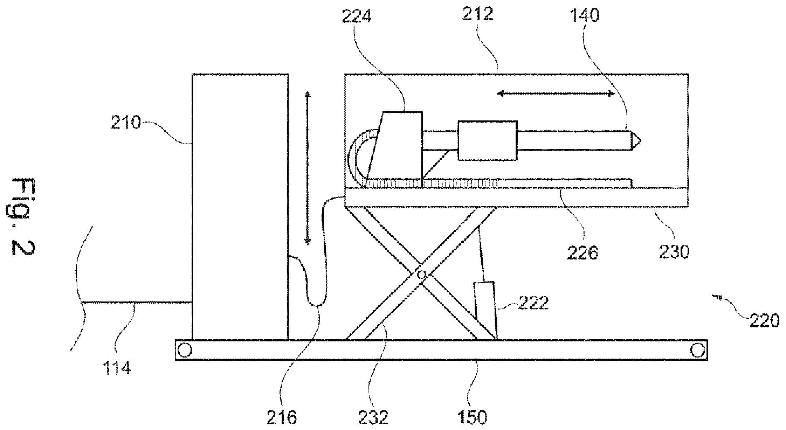

Referring now to Fig. 2, a connector module 220 is shown in further detail. The connector module 220 may be a connector module 120 as shown in Fig. 1, and only differences to the embodiment shall be described. The connector module 220 includes a cabinet 210 for receiving the electrical connection 114. The cabinet 210 may include the controller 130 and further components, such as electrical components, such as switchgear, HVAC equipment, user interfaces or the like. The charging connector
140 may be a charging connector according to aspects or embodiments described herein. Particularly, the charging connector 140 may be a charging connector as described in document EP3280608A1. An electrical connection 216 connects the cabinet 210 to the charging connector 140 and provides the output power to the charging connector. The charging connector is provided inside an enclosure 212. When retracted, e.g. as shown in Fig. 2, the charging connector fully fits inside the enclosure 212. The enclosure 212 may comprise an opening for allowing the charging connector 140 to extend outside the enclosure 212. The opening may include a mechanism for reversibly opening and closing the opening, such as a door, hatch, curtain, blind or the like. The mechanism may include an actuator for opening or closing the opening.

According to embodiments, e.g. as shown in Fig. 2, the enclosure 212 is suitable for protecting the charging connector 140 and further components inside the enclosure 212 against solid and/or liquid ingress, e.g. by preventing ingress into the enclosure. The ingress protection may be rated IP55, IP65 or even IP66, particularly when the charging connector 140 is fully retracted.

According to embodiments, the charging module may include one or more sealing members provided between portions of the charging connector and the enclosure. The sealing members may be flexible to allow a movement of the charging connector with respect to the enclosure, such as a horizontal movement, e.g. as provided by the second actuator, and/or a pivot motion of the charging connector. The sealing members may prevent solid and/or liquid ingress into the enclosure, particularly when the opening is open. The sealing members may include bellows, particularly folded bellows. For example, with reference to Fig. 2, a bellow (not shown) may be provided between the opening, shown in the figure on the right side of the enclosure 212, and the second actuator 224. The bellow may be affixed to the opening and/or the actuator. The bellow may define an inside portion of the enclosure, the inside portion including e.g. the guide structure 226, and an outside portion, the outside portion including the charging connector 140. The bellow may be moveably arranged, e.g. held on and/or suspended from a plurality of suspension points, on a guide structure, such as rails or guide rods. The guide structure may be provided in an upper surface of the enclosure 212, such as a top plate. When extending the charging connector 140, the bellow is compressed between the stationary opening and the moving second actuator 224, i.e. the volume of the inside portion increases, and the volume of the outside portion decreases. The bellow may beneficially prevent liquid/solid ingress into the inside portion of the enclosure.

As shown in Fig. 2, the charging connector 140 is provided on a height-adjustable platform 230. The height-adjustable platform 230 is arranged on the moveable frame 150. The height-adjustable platform includes a scissor mechanism 232 and a first actuator 222 for driving the scissor mechanism 232. According to embodiments, the height-adjustable platform 230 may be a lift table. When the first actuator 222 drives the scissor mechanism 232, the height of the height-adjustable platform 230 may be adjusted, as indicated by the vertical arrow, particularly to bring the charging connector 140 to a target height corresponding to the height of a receiving connector (not shown). A protective bellow (not shown), such as a bellow skirt, may be provided around the scissor mechanism between the moveable frame 150 and the height-adjustable platform 230. The protective bellow may beneficially prevent liquid/solid ingress into the scissor mechanism 232, particularly according to ratings IP55 or better, such as IP65 or IP66.

As shown in Fig. 2, the charging connector 140 is provided on a guide structure 226 configured for interacting with the second actuator 224 to drive the charging connector 140 along the guide structure 226. Thus, the charging connector 140 may be extended or retracted along a horizontal axis as indicated by the horizontal arrow, particularly to connect the charging connector 140 to a receiving connector (not shown).

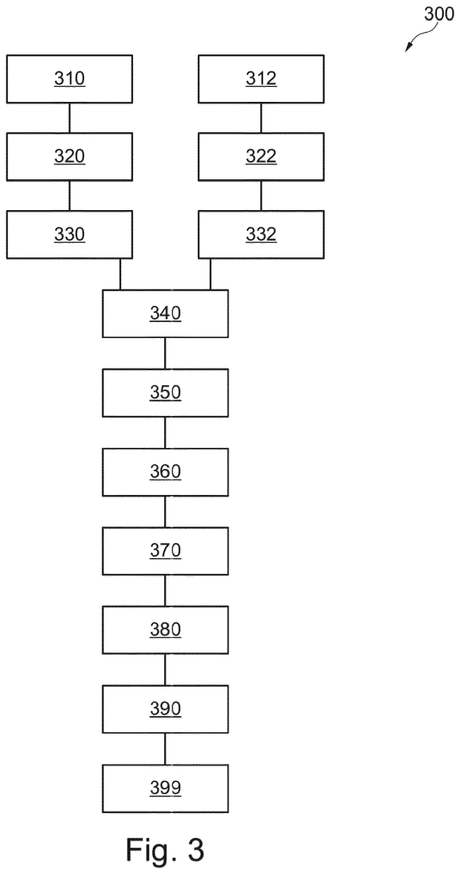

Referring now to Fig. 3, a method 300 of charging an industrial electric vehicle with a charging system is described. The charging system includes a charger module, which, according to embodiments, may already be provided on-site. If the charger module is already provided, the operations 312, 322 and 332 may be optional. According to method 300, a connector module is provided. The connector module includes a charging connector, a first actuator, a second actuator and a moveable frame. The modules and further components described in the method may be modules and further components according to aspects and/or embodiments described herein. The modules and further components described herein may be configured for executing operations described for the method 300.

In particular, the charger module may be a charger module such as charger module 110, and the connector module may be a connector module such as connector module 120 and/or connector module 220. In operation 310, the moveable frame of the connector module is coupled to a first transport device.

In operation 310, the moveable frame of the connector module is coupled to a first transport device. In operation 312, the moveable frame of the charger module is coupled to a second transport device. Coupling may be performed by utilizing coupling devices according to aspects and/or embodiments described herein. Coupling may be performed by coupling a coupling device, such as a hook or a tow hitch of a transport device, such as a transport vehicle, to the coupling device.

In operation 320, the moveable frame of the connector module is transported to a first location. In operation 322, the moveable frame of the charger module is transported to a second location. By transporting the moveable frame, also the charger module arranged thereon, or the connector module arranged thereon is transported. Transporting may include utilizing the transport device according to its standard mode of operation. Transporting may further include an intermediate change of the transport device, i.e. the method is not limited to utilizing only one transport device, and it is understood that several transport devices, according to typical shipping procedures, may be utilized. For example, the first and/or second transport device may be a truck for transporting the moveable frames to a shipping yard, the frames may be hooked to a crane, shipped in e.g. a container ship, and be further transported, e.g. by truck or rail, to an industrial site. The first location and/or the second location may be locations at the industrial site.

In operation 330, the first transport device is decoupled from the moveable frame of the connector module. In operation 332, the second transport device is decoupled from the moveable frame of the charger module. Decoupling may include positioning the moveable frame, i.e. the charger module and/or the connector module, at a suitable location for the charging system, e.g. setting up the connector module adjacent to a charging lane, setting up the charger module in a position suitable for connecting to the primary power source and the connector module, or the like.

In operation 340, the charger module is electrically connected to the connector module to provide an output power to the connector module. Operation 340 may include electrically connecting the connector module to the charger module for receiving the input power. Typically, the connection may be formed on-site, particularly if the charger module and the connector module are separate modules. The electrical connection may be an electrical connection according to aspects and/or embodiments described herein, such as an electric cable. If the charger module and the connector module are combined on a single moveable frame, the electrical connection may be formed at any time, e.g. during manufacture or assembly of the modules.

According to embodiments, the connector module and the charger module may be combined on a single moveable frame. Thus, operations 310 and 312, operations 320 and 322, and operations 330 and 332 may be combined, i.e. the combined modules may be coupled transported and decoupled together on, to and from a single transport device. Furthermore, operation 340 may be performed before or during the transporting of the modules. Furthermore, the first location and the second location may be the same location.

In operation 350, the IEV is positioned in a charging position. The charging position may be a position in a charging area, according to embodiments described herein.

In operation 360, a position of the receiving connector of the IEV is detected. Operation 360 may include determining a horizontal offset of the receiving connector, and sending instruction signals to the IEV and/or the driver of the IEV to position the IEV to horizontally align the charging connector with the receiving connector, e.g. according to aspects and/or embodiments described herein.

In operation 370, the first actuator is controlled to adjust the position of the charging connector according to the position of the receiving connector. Adjusting the position of the charging connector may include adjusting the position of the charging connector along an essentially vertical axis and/or direction, particularly according to aspects and/or embodiments described herein. Controlling the first actuator may result in the charging connector being aligned with the receiving connector of the IEV.

In operation 380, the second actuator is controlled to connect the charging connector to the receiving connector, particularly according to aspects and/or embodiments described herein. Connecting the charging connector may include extending the charging connector. Connecting the charging connector may include horizontally moving the charging connector towards the receiving connector. Connecting the charging connector may include electrically connecting the charging connector and the receiving connector, i.e. forming an electrical contact between the charging connector and the receiving connector.

The method 300 may include the operation 390. In operation 390, the IEV is charged. Charging the IEV may include providing the output power to the IEV according to aspects and/or embodiments described herein. Charging the IEV may comprise communication with the IEV before, during and after providing the output power to the IEV, e.g. according to aspects and/or embodiments described herein.

The method 300 may include the operation 399. In operation 399, the second actuator is controlled to disconnect the charging connector from the receiving connector. Disconnecting the charging connector from the receiving connector may include reversing the movement performed in operation 380, i.e. retracting the charging connector. Operation 399 may further include controlling the first actuator to vertically move the charging connector into a default position. The default position may be a lowered position, e.g. a position in which the charging connector is fully lowered. After performing operation 399, an instruction signal may be sent to the IEV and/or the driver of the IEV to signal that it is safe to leave the charging area.

According to embodiments, the use of the charging system according to an aspect and/or embodiment described herein for charging an IEV is described. The use may include performing one or more operations according to a method described herein, such as the method 300. The use may include transporting the moveable frame of the connector module and/or the moveable frame of the charger module.

## Claims

1. A charging system (100) for an industrial electric vehicle (102), comprising
a charger module (110);
a connector module (120, 220); and
a controller (130), wherein
the charger module (110) is configured for receiving an input power from a primary power source (112),
the charger module (110) is configured for converting the input power into an output power and providing the output power to the connector module (120, 220),
the connector module (120, 220) is electrically connected, by an electrical connection (114), to the charger module (110) for providing the output power to the connector module (120, 220),
the connector module (120, 220) comprises a charging connector (140) electrically connected to the charger module (110) for receiving the output power from the charger module (110),
the connector module (120, 220) is configured for transiently connecting the charging connector (140) to a receiving connector (142) of the industrial electric vehicle (102),
the connector module (120, 220) is configured for charging the industrial electric vehicle (102) with the output power,
the connector module (120, 220) comprises an enclosure (212) for protecting the charging connector (140) against solid and/or liquid ingress, wherein the charging connector (140) fits inside the enclosure (212) when retracted, and wherein the charging connector (140) extends outside the enclosure (212) when extended;
the connector module (120, 220) further comprising a first actuator (122, 222) for adjusting a vertical position of the charging connector (140), and a second actuator (124, 224) for adjusting a horizontal position of the charging connector (140), and wherein
the controller (130) is configured for
detecting a position of the receiving connector (142), and
controlling the first actuator (122, 222) to adjust the position of the charging connector (140) according to the position of the receiving connector (142), and
controlling the second actuator (124, 224) to connect the charging connector (140) to the receiving connector (142) by extending the charging connector (140) out of the enclosure (212), and wherein
the connector module (120, 220), and optionally the charger module (110), is/are arranged on a movable frame (150), the movable frame (150) comprising a coupling device (152), wherein the coupling device (152) is configured for coupling the movable frame (150) to a transport device for transporting the movable frame (150).

2. The charging system (100) according to claim 1, wherein the electrical connection (114) is a DC electrical connection.

3. The charging system (100) according to claim 1 or 2, wherein the output power is a DC electrical power of at least 500 kW and/or at least 500 V and/or at least 800 A.

4. The charging system (100) according to any of the preceding claims, wherein the transport device is one selected from the group consisting of:
- a forklift;
- a crane;
- a truck;
- a low loader;
- a high loader;
- a helicopter;
- an aircraft;
- a ship;
- a tractor; and
- a train.

5. The charging system (100) according to any of the preceding claims, wherein the controller (130) is configured for detecting the industrial electric vehicle (102) inside a charging area.

6. The charging system (100) according to any of the preceding claims, wherein the controller (130) is configured for communicating with the industrial electric vehicle (102), wherein communicating comprises exchanging data comprising one or more selected from the group consisting of:
- a charging system ID;
- a vehicle ID;
- a vehicle power state, particularly a battery state of charge;
- a charging system power rating.

7. The charging system (100) according to any of the preceding claims, wherein the charging connector (140) is provided on a height-adjustable platform, the height-adjustable platform comprising the first actuator (122, 222).

8. The charging system (100) according to any of the preceding claims, wherein the enclosure is an enclosure having an ingress protection according to IP55.

9. The charging system (100) according to any of the preceding claims, wherein the charger module (110) and the connector module (120, 220) are arranged on the same movable frame (150).

10. A method (300) of charging an industrial electric vehicle (102) with a charging system (100), the charging system (100) comprising:
a charger module (110); and
a connector module (120, 220) comprising a charging connector (140), a first actuator (122, 222) for adjusting a vertical position of the charging connector,
a second actuator (124, 224) for adjusting a horizontal position of the charging connector and a moveable frame (150), wherein the connector module (120, 220) comprises an enclosure (212) for protecting the charging connector (140) against solid and/or liquid ingress, wherein the charging connector (140) fits inside the enclosure (212) when retracted, and wherein the charging connector (140) extends outside the enclosure (212) when extended; the method comprising:
coupling (310) the moveable frame (150) of the connector module (120, 220) to a first transport device;
transporting (320) the moveable frame (150) to a first location;
decoupling (330) the first transport device from the moveable frame (150) of the connector module (120, 220);
electrically connecting (340) the charger module (110) and the connector module (120, 220) to provide an output power to the connector module (120, 220);
positioning (350) the industrial electric vehicle (102) in a charging position;
detecting (360) a position of a receiving connector (142) of the industrial electric vehicle (102);
controlling (370) the first actuator (122, 222) to adjust the position of the charging connector (140) according to the position of the receiving connector (142); and
controlling (380) the second actuator (124, 224) to connect the charging connector (140) to the receiving connector (142) by extending the charging connector (140) out of the enclosure (212).

11. The method according to claim 10, further comprising:
charging (390) the industrial electric vehicle (102),
controlling (399) the second actuator (124, 224) to disconnect the charging connector (140) from the receiving connector (142).

12. The method according to claim 10 or 11, wherein the charger module (110) comprises a moveable frame (150), the method further comprising:
coupling (312) the moveable frame (150) of the charger module (110) to a second transport device;
transporting (322) the moveable frame (150) of the charger module (110) to a second location;
decoupling (332) the second transport device from the moveable frame (150) of the charger module (110).

13. Use of the charging system (100) according to any of claims 1 to 9 for charging an industrial electric vehicle (102), the use comprising:
coupling (310) a moveable frame (150) of the connector module (120, 220) to a first transport device;
transporting (320) the moveable frame (150) to a first location;
decoupling (330) the first transport device from the moveable frame (150) of the connector module (120, 220);
electrically connecting (340) the charger module (110) and the connector module (120, 220) to provide an output power to the connector module (120, 220);
positioning (350) the industrial electric vehicle (102) in a charging position;
detecting (360) a position of a receiving connector (142) of the industrial electric vehicle (102);
controlling (370) the first actuator (122, 222) to adjust the position of the charging connector (140) according to the position of the receiving connector (142); and
controlling (380) the second actuator (124, 224) to connect the charging connector (140) to the receiving connector (142) by extending the charging connector (140) out of the enclosure (212).

14. Use according to claim 13, further comprising transporting the moveable frame (150) of the connector module (120, 220) and/or the moveable frame (150) of the charger module (110).

## Patentansprüche

1. Ladesystem (100) für ein industrielles Elektrofahrzeug (102), umfassend
ein Lademodul (110);
ein Verbindermodul (120, 220); und
eine Steuervorrichtung (130), wobei
das Lademodul (110) zum Empfangen einer Eingangsleistung von einer Primärleistungsquelle (112) ausgelegt ist,
das Lademodul (110) zum Umwandeln der Eingangsleistung in eine Ausgangsleistung und zum Bereitstellen der Ausgangsleistung an das Verbindermodul (120, 220) ausgelegt ist,
das Verbindermodul (120, 220) durch eine elektrische Verbindung (114) elektrisch mit dem Lademodul (110) verbunden ist, um die Ausgangsleistung an das Verbindermodul (120, 220) bereitzustellen,
das Verbindermodul (120, 220) einen Ladeverbinder (140) umfasst, der elektrisch mit dem Lademodul (110) verbunden ist, um die Ausgangsleistung von dem Lademodul (110) zu empfangen,
das Verbindermodul (120, 220) zum vorübergehenden Verbinden des Ladeverbinders (140) mit einem Aufnahmeverbinder (142) des industriellen Elektrofahrzeugs (102) ausgelegt ist,
das Verbindermodul (120, 220) zum Laden des industriellen Elektrofahrzeugs (102) mit der Ausgangsleistung ausgelegt ist,
das Verbindermodul (120, 220) ein Gehäuse (212) zum Schutz des Ladeverbinders (140) vor dem Eindringen von festen und/oder flüssigen Stoffen umfasst, wobei der Ladeverbinder (140) im eingefahrenen Zustand in das Gehäuse (212) hineinpasst und wobei der Ladeverbinder (140) im ausgefahrenen Zustand aus dem Gehäuse (212) herausragt;
wobei das Verbindermodul (120, 220) ferner einen ersten Aktuator (122, 222) zum Einstellen einer vertikalen Position des Ladeverbinders (140) und einen zweiten Aktuator (124, 224) zum Einstellen einer horizontalen Position des Ladeverbinders (140) umfasst und wobei die Steuervorrichtung (130) ausgelegt ist zum Detektieren einer Position des Aufnahmeverbinders (142), und
Steuern des ersten Aktuators (122, 222), um die Position des Ladeverbinders (140) gemäß der Position des Aufnahmeverbinders (142) einzustellen, und
Steuern des zweiten Aktuators (124, 224), um den Ladeverbinder (140) mit dem Aufnahmeverbinder (142) zu verbinden, indem der Ladeverbinder (140) aus dem Gehäuse (212) ausgefahren wird, und wobei
das Verbindermodul (120, 220) und optional das Lademodul (110) an einem beweglichen Rahmen (150) angeordnet ist/sind, wobei der bewegliche Rahmen (150) eine Kopplungsvorrichtung (152) umfasst, wobei die Kopplungsvorrichtung (152) zum Koppeln des beweglichen Rahmens (150) mit einer Transportvorrichtung zum Transportieren des beweglichen Rahmens (150) ausgelegt ist.

2. Ladesystem (100) nach Anspruch 1, wobei die elektrische Verbindung (114) eine elektrische Gleichstromverbindung ist.

3. Ladesystem (100) nach Anspruch 1 oder 2, wobei die Ausgangsleistung eine elektrische Gleichstromleistung von mindestens 500 kW und/oder mindestens 500 V und/oder mindestens 800 A ist.

4. Ladesystem (100) nach einem der vorhergehenden Ansprüche, wobei die Transportvorrichtung eine ist, die aus der Gruppe bestehend aus folgenden ausgewählt ist:
- ein Gabelstapler;
- ein Kran;
- ein LKW;
- ein Tieflader;
- ein Hochlader;
- ein Hubschrauber;
- ein Flugzeug;
- ein Schiff;
- ein Traktor; und
- ein Zug.

5. Ladesystem (100) nach einem der vorhergehenden Ansprüche, wobei die Steuervorrichtung (130) zum Detektieren des industriellen Elektrofahrzeugs (102) innerhalb eines Ladebereichs ausgelegt ist.

6. Ladesystem (100) nach einem der vorhergehenden Ansprüche, wobei die Steuervorrichtung (130) zum Kommunizieren mit dem industriellen Elektrofahrzeug (102) ausgelegt ist, wobei das Kommunizieren das Austauschen von Daten umfasst, die ein oder mehrere Elemente aus der Gruppe bestehend aus folgenden umfassen:
- eine Ladesystem-ID;
- eine Fahrzeug-ID;
- ein Fahrzeugleistungszustand, insbesondere ein Batterieladezustand;
- eine Nennleistung des Ladesystems.

7. Ladesystem (100) nach einem der vorhergehenden Ansprüche, wobei der Ladeverbinder (140) auf einer höhenverstellbaren Plattform bereitgestellt ist, wobei die höhenverstellbare Plattform den ersten Aktuator (122, 222) umfasst.

8. Ladesystem (100) nach einem der vorhergehenden Ansprüche, wobei das Gehäuse ein Gehäuse mit einem Eindringschutz gemäß IP55 ist.

9. Ladesystem (100) nach einem der vorhergehenden Ansprüche, wobei das Lademodul (110) und das Verbindermodul (120, 220) auf demselben beweglichen Rahmen (150) angeordnet sind.

10. Verfahren (300) zum Laden eines industriellen Elektrofahrzeugs (102) mit einem Ladesystem (100), wobei das Ladesystem (100) Folgendes umfasst:
ein Lademodul (110); und
ein Verbindermodul (120, 220), umfassend einen Ladeverbinder (140), einen ersten Aktuator (122, 222) zum Einstellen einer vertikalen Position des Ladeverbinders, einen zweiten Aktuator (124, 224) zum Einstellen einer horizontalen Position des Ladeverbinders und einen beweglichen Rahmen (150), wobei das Verbindermodul (120, 220) ein Gehäuse (212) zum Schutz des Ladeverbinders (140) vor dem Eindringen von festen und/oder flüssigen Stoffen umfasst, wobei der Ladeverbinder (140) im eingefahrenen Zustand in das Gehäuse (212) hineinpasst und wobei der Ladeverbinder (140) im ausgefahrenen Zustand aus dem Gehäuse (212) herausragt; wobei das Verfahren Folgendes umfasst:
Koppeln (310) des beweglichen Rahmens (150) des Verbindermoduls (120, 220) mit einer ersten Transportvorrichtung;
Transportieren (320) des beweglichen Rahmens (150) zu einem ersten Ort;
Entkoppeln (330) der ersten Transportvorrichtung von dem beweglichen Rahmen (150) des Verbindermoduls (120, 220);
elektrisches Verbinden (340) des Lademoduls (110) und des Verbindermoduls (120, 220), um dem Verbindermodul (120, 220) eine Ausgangsleistung bereitzustellen;
Positionieren (350) des industriellen Elektrofahrzeugs (102) in einer Ladeposition;
Detektieren (360) einer Position eines Aufnahmeverbinders (142) des industriellen Elektrofahrzeugs (102);
Steuern (370) des ersten Aktuators (122, 222), um die Position des Ladeverbinders (140) gemäß der Position des Aufnahmeverbinders (142) einzustellen, und
Steuern (380) des zweiten Aktuators (124, 224), um den Ladeverbinder (140) mit dem Aufnahmeverbinder (142) zu verbinden, indem der Ladeverbinder (140) aus dem Gehäuse (212) ausgefahren wird.

11. Verfahren nach Anspruch 10, ferner umfassend:
Laden (390) des industriellen Elektrofahrzeugs (102), Steuern (399) des zweiten Aktuators (124, 224), um den Ladeverbinder (140) vom Aufnahmeverbinder (142) zu trennen.

12. Verfahren nach Anspruch 10 oder 11, wobei das Lademodul (110) einen beweglichen Rahmen (150) umfasst, wobei das Verfahren ferner Folgendes umfasst:
Koppeln (312) des beweglichen Rahmens (150) des Lademoduls (110) mit einer zweiten Transportvorrichtung; Transportieren (322) des beweglichen Rahmens (150) des Lademoduls (110) zu einem zweiten Ort;
Entkoppeln (332) der zweiten Transportvorrichtung von dem beweglichen Rahmen (150) des Lademoduls (110).

13. Verwendung des Ladesystems (100) nach einem der Ansprüche 1 bis 9 zum Laden eines industriellen Elektrofahrzeugs (102), wobei die Verwendung Folgendes umfasst:
Koppeln (310) eines beweglichen Rahmens (150) des Verbindermoduls (120, 220) mit einer ersten Transportvorrichtung;
Transportieren (320) des beweglichen Rahmens (150) zu einem ersten Ort;
Entkoppeln (330) der ersten Transportvorrichtung von dem beweglichen Rahmen (150) des Verbindermoduls (120, 220); elektrisches Verbinden (340) des Lademoduls (110) und des Verbindermoduls (120, 220), um dem Verbindermodul (120, 220) eine Ausgangsleistung bereitzustellen;
Positionieren (350) des industriellen Elektrofahrzeugs (102) in einer Ladeposition;
Detektieren (360) einer Position eines Aufnahmeverbinders (142) des industriellen Elektrofahrzeugs (102);
Steuern (370) des ersten Aktuators (122, 222), um die Position des Ladeverbinders (140) gemäß der Position des Aufnahmeverbinders (142) einzustellen, und
Steuern (380) des zweiten Aktuators (124, 224), um den Ladeverbinder (140) mit dem Aufnahmeverbinder (142) zu verbinden, indem der Ladeverbinder (140) aus dem Gehäuse (212) ausgefahren wird.

14. Verwendung nach Anspruch 13, ferner umfassend das Transportieren des beweglichen Rahmens (150) des Verbindermoduls (120, 220) und/oder des beweglichen Rahmens (150) des Lademoduls (110).

## Revendications

1. Système de charge (100) pour un véhicule électrique industriel (102), comprenant
un module chargeur (110) ;
un module connecteur (120, 220) ; et
un contrôleur (130), dans lequel
le module chargeur (110) est configuré pour recevoir une puissance d'entrée d'une source d'alimentation primaire (112),
le module chargeur (110) est configuré pour convertir la puissance d'entrée en une puissance de sortie et fournir la puissance de sortie au module connecteur (120, 220), le module connecteur (120, 220) est connecté électriquement, par une connexion électrique (114), au module chargeur (110) pour fournir la puissance de sortie au module connecteur (120, 220),
le module connecteur (120, 220) comprend un connecteur de charge (140) connecté électriquement au module chargeur (110) pour recevoir la puissance de sortie du module chargeur (110),
le module connecteur (120, 220) est configuré pour connecter transitoirement le connecteur de charge (140) à un connecteur de réception (142) du véhicule électrique industriel (102),
le module connecteur (120, 220) est configuré pour charger le véhicule électrique industriel (102) avec la puissance de sortie,
le module connecteur (120, 220) comprend une enceinte (212) pour protéger le connecteur de charge (140) contre la pénétration de solides et/ou de liquides, dans lequel le connecteur de charge (140) s'insère dans l'enceinte (212) lorsqu'il est rétracté, et dans lequel le connecteur de charge (140) s'étend à l'extérieur de l'enceinte (212) lorsqu'il est étendu ;
le module connecteur (120, 220) comprenant en outre un premier actionneur (122, 222) pour régler une position verticale du connecteur de charge (140), et un second actionneur (124, 224) pour régler une position horizontale du connecteur de charge (140), et dans lequel le contrôleur (130) est configuré pour
détecter une position du connecteur de réception (142), et
commander le premier actionneur (122, 222) pour régler la position du connecteur de charge (140) en fonction de la position du connecteur de réception (142), et commander le second actionneur (124, 224) pour connecter le connecteur de charge (140) au connecteur de réception (142) en étendant le connecteur de charge (140) hors de l'enceinte (212), et dans lequel
le module connecteur (120, 220), et facultativement le module chargeur (110), est/sont agencé(s) sur un cadre mobile (150), le cadre mobile (150) comprenant un dispositif d'accouplement (152), le dispositif d'accouplement (152) étant configuré pour accoupler le cadre mobile (150) à un dispositif de transport pour transporter le cadre mobile (150).

2. Système de charge (100) selon la revendication 1, dans lequel la connexion électrique (114) est une connexion électrique à courant continu.

3. Système de charge (100) selon la revendication 1 ou 2, dans lequel la puissance de sortie est une puissance électrique à courant continu d'au moins 500 kW et/ou d'au moins 500 V et/ou d'au moins 800 A.

4. Système de charge (100) selon l'une quelconque des revendications précédentes, dans lequel le dispositif de transport est un dispositif choisi dans le groupe constitué par
- un chariot élévateur à fourche ;
- une grue ;
- un camion ;
- une chargeuse surbaissée ;
- une chargeuse surélevée ;
- un hélicoptère ;
- un aéronef ;
- un navire ;
- un tracteur ; et
- un train.

5. Système de charge (100) selon l'une quelconque des revendications précédentes, dans lequel le contrôleur (130) est configuré pour détecter le véhicule électrique industriel (102) à l'intérieur d'une zone de charge.

6. Système de charge (100), selon l'une quelconque des revendications précédentes, dans lequel le contrôleur (130) est configuré pour communiquer avec le véhicule électrique industriel (102), la communication comprenant l'échange de données comprenant une ou plusieurs données choisies dans le groupe constitué par :
- un ID du système de charge ;
- un ID du véhicule ;
- un état d'alimentation du véhicule, en particulier un état de charge de la batterie ;
- une puissance nominale du système de charge.

7. Système de charge (100) selon l'une quelconque des revendications précédentes, dans lequel le connecteur de charge (140) est placé sur une plateforme réglable en hauteur, la plateforme réglable en hauteur comprenant le premier actionneur (122, 222).

8. Système de charge (100) selon l'une quelconque des revendications précédentes, dans lequel l'enceinte est une enceinte ayant une protection contre la pénétration selon IP55.

9. Système de charge (100) selon l'une quelconque des revendications précédentes, dans lequel le module chargeur (110) et le module connecteur (120, 220) sont agencés sur le même cadre mobile (150).

10. Procédé (300) de charge d'un véhicule électrique industriel (102) par un système de charge (100), le système de charge (100) comprenant :
un module chargeur (110) ; et
un module connecteur (120, 220) comprenant un connecteur de charge (140), un premier actionneur (122, 222) pour régler une position verticale du connecteur de charge, un second actionneur (124, 224) pour régler une position horizontale du connecteur de charge et un cadre mobile (150), le module connecteur (120, 220) comprenant une enceinte (212) pour protéger le connecteur de charge (140) contre la pénétration de solides et/ou de liquides, dans lequel le connecteur de charge (140) s'insère dans l'enceinte (212) lorsqu'il est rétracté, et dans lequel le connecteur de charge (140) s'étend à l'extérieur de l'enceinte (212) lorsqu'il est étendu ; le procédé comprenant :
l'accouplement (310) du cadre mobile (150) du module de connecteur (120, 220) à un premier dispositif de transport ;
le transport (320) du cadre mobile (150) à un premier emplacement ;
le dégagement (330) du premier dispositif de transport du cadre mobile (150) du module connecteur (120, 220) ; la connexion électrique (340) du module chargeur (110) et du module connecteur (120, 220) pour fournir une puissance de sortie au module connecteur (120, 220) ;
le positionnement (350) du véhicule électrique industriel (102) dans une position de charge ;
la détection (360) d'une position d'un connecteur de réception (142) du véhicule électrique industriel (102) ; la commande (370) du premier actionneur (122, 222) pour régler la position du connecteur de charge (140) en fonction de la position du connecteur de réception (142) ; et
la commande (380) du second actionneur (124, 224) pour connecter le connecteur de charge (140) au connecteur de réception (142) en étendant le connecteur de charge (140) hors de l'enceinte (212).

11. Procédé selon la revendication 10, comprenant en outre :
la charge (390) du véhicule électrique industriel (102), la commande (399) du second actionneur (124, 224) pour déconnecter le connecteur de charge (140) du connecteur de réception (142).

12. Procédé selon la revendication 10 ou 11, dans lequel le module chargeur (110) comprend un cadre mobile (150), le procédé comprenant en outre :
l'accouplement (312) du cadre mobile (150) du module chargeur (110) à un second dispositif de transport ;
le transport (322) du cadre mobile (150) du module chargeur (110) à un second emplacement ;
le dégagement (332) du second dispositif de transport du cadre mobile (150) du module chargeur (110).

13. Utilisation du système de charge (100) selon l'une quelconque des revendications 1 à 9 pour charger un véhicule électrique industriel (102), l'utilisation comprenant :
l'accouplement (310) d'un cadre mobile (150) du module de connecteur (120, 220) à un premier dispositif de transport ;
le transport (320) du cadre mobile (150) à un premier emplacement ;
le dégagement (330) du premier dispositif de transport du cadre mobile (150) du module connecteur (120, 220) ; la connexion électrique (340) du module chargeur (110) et du module connecteur (120, 220) pour fournir une puissance de sortie au module connecteur (120, 220) ;
le positionnement (350) du véhicule électrique industriel (102) dans une position de charge ;
la détection (360) d'une position d'un connecteur de réception (142) du véhicule électrique industriel (102) ; la commande (370) du premier actionneur (122, 222) pour régler la position du connecteur de charge (140) en fonction de la position du connecteur de réception (142) ; et
la commande (380) du second actionneur (124, 224) pour connecter le connecteur de charge (140) au connecteur de réception (142) en étendant le connecteur de charge (140) hors de l'enceinte (212).

14. Utilisation selon la revendication 13, comprenant en outre le transport du cadre mobile (150) du module connecteur (120, 220) et/ou du cadre mobile (150) du module chargeur (110).
